# EUROPEAN PATENT SPECIFICATION

(11) **EP 3 386 025 B1**
(45) Date of publication and mention of the grant of the patent: **21.07.2021**
(21) Application number: 16869830.6
(22) Date of filing: 25.10.2016
(51) Int. Cl.: H01M 10/0587, H01M 50/538, H01M 10/0525, H01M 10/04, H01M 4/02

(54) **LITHIUM-ION BATTERY CELL AND LITHIUM-ION BATTERY**
LITHIUM-IONEN-BATTERIEZELLE UND LITHIUM-IONEN-BATTERIE
ÉLÉMENT DE BATTERIE AU LITHIUM-ION ET BATTERIE AU LITHIUM-ION

(30) Priority: 30.11.2015 CN 201510861234
(43) Date of publication of application: 10.10.2018
(73) Proprietor: Gree Electric Appliances, Inc. of Zhuhai, Qianshan Zhuhai Guangdong 519070 (CN)
(72) Inventor: ZHONG, Kuan, Zhuhai, Guangdong 519070 (CN); JIANG, Shiyong, Zhuhai, Guangdong 519070 (CN); WANG, Wenhua, Zhuhai, Guangdong 519070 (CN); LI, Ying, Zhuhai, Guangdong 519070 (CN); LI, Qianqian, Zhuhai, Guangdong 519070 (CN); LIU, Hongming, Zhuhai, Guangdong 519070 (CN)
(74) Representative: Lavoix
(86) International application number: PCT/CN2016/103256
(87) International publication number: WO 2017/092520

(56) References cited:
- CN-A- 101 950 816
- CN-A- 101 950 816
- CN-A- 102 437 377
- CN-A- 102 544 437
- CN-A- 105 070 880
- CN-A- 105 355 983
- CN-U- 205 141 088
- KR-A- 20150 030 537
- KR-A- 20150 030 537

## Description

The present application claims priority to Chinese Patent Application No. 201510861234.X, titled "LITHIUM-ION BATTERY CELL AND LITHIUM-ION BATTERY", filed on November 30, 2015 with the State Intellectual Property Office of People's Republic of China.

### FIELD

The present disclosure relates to the technical field of lithium-ion batteries, in particular to a lithium-ion battery cell and a lithium-ion battery.

### BACKGROUND

At present, clean and high-efficient energy conversion and storage devices such as lithium-ion batteries are widely used. Power lithium-ion batteries mainly include types of cylindrical, laminated aluminum plastic film, winding square (aluminum cased), laminated square and the like. A process for a cylindrical battery is mature, the cylindrical battery has a high consistency and may be designed to have a high rate. However, capacity of the cylindrical battery is small. In a case that the cylindrical battery is used in an electric vehicle, a large number of single batteries are required, a battery management module is complex, and a difference between two single batteries may lead to a reduced service life and a decreased performance of the battery module. A laminated battery has an advantage of a high rate performance. However, the process required by the laminated battery is relatively complex and the laminated battery is prone to self-discharge. A winding square battery may be designed to have a high capacity, while the rate performance is reduced. Furthermore, a battery with an aluminum plastic film case is prone to be deformed and destroyed by an external force. In the field of energy storage, it is intended to use a large-capacity single battery. An energy storage battery do not have a high requirement on the rate performance, in this case, aluminum cased batteries have advantages in this respect. However, for high-end energy storage products, a good rate performance is also required. Therefore, it is of great significance for application fields requiring high-capacity single batteries such as the electric vehicles field and the energy storage field to design a battery packaged in an aluminum case, which has a larger capacity and an improved rate performance.

In order to increase a power density of a lithium-ion battery, that is, to improve the rate performance of the battery, it is required to reduce an internal resistance of the battery, reduce polarization inside the battery and accelerate an output of current. An effective way to achieve these objects is to increase the number of lugs in the battery. The laminated battery is an effective selection for a high rate battery. The laminated battery has a superior rate performance and a large number of lugs due to the characteristics of lamination. However, for the battery with this structure, the preparation efficiency is low, a displacement is prone to occur between adjacent layers, and there is a large safety margin due to many burrs on an edge of a plate. In addition, the amount of self-discharge of the battery is large. For a winding lithium-ion battery, the number of lugs may be increased by increasing the number of cells connected in parallel, which may reduce capacity and the preparation efficiency of the battery, and may also affect the consistency of the battery. Therefore, a new lithium-ion battery is required.

KR20150030537A relates to a single winding core with a plurality of taps, lithium cells with the single winding core and a continuous winding method of the single winding core where the positive electrode area on the surface of the positive electrode plate of the single winding core is matched with the negative electrode area of the surface of the negative electrode plate, and a plurality of negative electrode taps and positive electrode taps are arranged respectively on one side of the negative electrode plate and the positive electrode plate wherein the negative electrode taps and positive electrode tap are arranged at a different position. Therefore, in the present invention, the positive electrode plate, a first separation film, the negative electrode plate and a second separation film are consecutively stacked and continuously wound, thereby enabling the positive electrode tap and the negative electrode tap to form each positive electrode tap group and negative electrode tap group and accordingly enabling the single winding core to release high current.

CN101950816A discloses a square power lithium ion battery cell and a manufacturing method thereof, belonging to the field of lithium ion battery manufacturing. The square power lithium ion battery cell comprises a positive plate, a diaphragm, a negative plate, a positive lug and a negative lug; the square power lithium ion battery cell is formed by winding the positive plate, the diaphragm and the negative plate around a coiling needle; the upper side and the lower side of the coiling needle after coiled are both provided with the negative lug and the positive lug; the positive lug is positioned on one end of the battery cell body; the negative lug is positioned on the other end of the battery cell body; the positive lug and the negative lug are positioned on the same side of the battery cell body; and the negative lug and the positive lug are reserved by laser cutting. The method comprises: reserving a non-coated area for a pole piece coating coat; cutting the reserved lug by laser cutting according to the preset lug interval; and successively stacking and coiling the positive plate, the diaphragm and the negative plate into the battery cell. The square power lithium ion battery cell of the invention has tidy lug arrangement and can realize the large current discharging performance of the battery.

CN102437377A relates to the field of lithium ion battery design, and discloses a winding power core, a soft-package lithium ion battery and a pole piece. The winding power core comprises a plurality of positive pole pieces, a plurality of negative pole pieces and a plurality of diaphragms which are stacked and wound together, the diaphragms are arranged between the positive pole pieces and the negative pole pieces at intervals, and the extension parts of the two opposite long edges of the positive pole pieces are respectively provided with at least two positive pole lug welding positions in a protruding way; the extension parts of the two opposite long edges of the negative pole pieces are respectively provided with at least two negative pole lug welding positions in a protruding way; all the positive pole lug welding positions of the positive pole pieces are arranged on the first width end and the second width end of the winding power core in a protruding way; all the negative pole lug welding positions of the negative pole pieces are arranged on the first width end and the second width end of the winding power core in a protruding way; and the positive pole lug welding positions or the negative pole lug welding positions are arranged in a staggered way on the first width end or the second width end of the winding power core. By adopting the technical scheme, the internal resistance of the lithium ion battery can be reduced, and the lithium ion battery can be prevented from expansion as a result of high temperature during high-rate discharging.

CN105070880A discloses pole plates with auxiliary tabs and a lithium-ion battery of the pole plates with the auxiliary tabs. The lithium-ion battery comprises a wound battery core, wherein the battery core comprises a positive plate, a first diaphragm, a negative plate and a second diaphragm; the positive plate and the negative plate are the pole plates with the auxiliary tabs; each pole plate with the auxiliary tabs comprises a coating part and a non-coating part; the non-coating parts are arranged in tail-end welding regions; the tabs are arranged on the non-coating parts along the length directions of the pole plates; a plurality of auxiliary tabs are distributed at one side of each coating part; after the pole plates are wound, the auxiliary tabs are stacked together; the positive plate, the first diaphragm, the negative plate and the second diaphragm are regularly stacked and wound into the battery core; after the auxiliary tabs are welded together in an overlapping manner, the positive auxiliary tabs and the negative auxiliary tabs are formed, and are coated with high-temperature gummed paper or teflon; and the positive auxiliary tabs and the negative auxiliary tabs are parallel to an upper plane of the storage battery after being bent. The pole plates with the auxiliary tabs and the lithium-ion battery have the beneficial effects that various segments of pole plates are connected with one another through the auxiliary tabs, so that high-current charging and discharging of the battery are realized; the stability of the ending positions of the wound tabs is ensured; the structure is simple; and the safety performance is high.

CN102544437A discloses a differential pitch pole piece and a power battery adopting the same, wherein the power battery comprises a battery cell, a positioning cover, an aluminium cover and a shell, the battery cell is arranged in the shell, the positioning cover is arranged above the battery cell, the aluminium cover is arranged above the positioning cover and is fixedly connected with the shell, the battery cell comprises a positive pole piece, a first membrane, a negative pole piece and a second membrane, both the positive and the negative pole pieces are differential pitch pole pieces, each differential pitch pole piece comprises a coating part and a non-coating part which is positioned above the coating part, the non-coating parts are punched at intervals to form a plurality of projecting parts, the widths of the projecting parts are the same, pitches between every two adjacent projecting parts are sequentially increased from front to back for forming a single differential pitch structure, or the pitches between every two spaced projecting parts are sequentially increased from front to back for forming a double-differential pitch structure, after the whole differential pitch pole pieces are wound, all the projecting parts are superposed with one another to form a pole lug, and the positive pole piece, the first membrane, the negative pole piece and the second membrane are stacked orderly to be wound into the battery cell. In the invention, the structure and the technology are simplified, the volume is reduced, and the quality of the power battery is improved.

### SUMMARY

In view of this, a lithium-ion battery cell and a lithium-ion battery are provided according to the present disclosure to solve the technical problems, the lithium-ion battery cell may have multiple positive lugs and multiple negative lugs, and the multiple positive lugs and the multiple negative lugs are wound to form the lithium-ion battery cell.

A lithium-ion battery cell is provided, which includes a positive plate, a membrane, and a negative plate. Multiple positive lugs are arranged along a winding direction on the positive plate in a unfolded state. Multiple negative lugs are arranged along a winding direction on the negative plate in a unfolded state. The positive plate and the negative plate are separated by the membrane and are wound to form the lithium-ion battery cell. The multiple positive lugs and the multiple negative lugs form a lug laminated structure or a lug staggered structure, such as specified in independent claims 1 and 6 and further detailed in the dependent claims. Furthermore, according to an embodiment of the present invention, multiple positive lugs are arranged in parallel in a direction along a length of the positive plate. A first lug margin x₁ indicates a distance between a first positive lug and a head of the positive plate relative to the winding direction. A distance between each of the positive lugs other than the first positive lug and the head of the positive plate is indicated by d₁, with d₁=n₁w-x₁+(0.5πt∑n₁-0.5πt) or d₁=n₃w+x₁+[0.5πt∑(n₃+1)-0.5πt]. The lithium-ion battery cell is square, and the multiple positive lugs form the lug laminated structure. t indicates a sum of thicknesses of the positive plate, the membrane and the negative plate. w indicates a width of the cell. The first positive lug is the one of the positive lugs which is located closest to the head of the positive plate. n₁ indicates that a positive lug is located at the n₁-th w on the positive plate along a direction from the head to a tail of the positive plate. n₃ indicates that a positive lug is located at the (n₃+1)-th w on the positive plate along the direction from the head to the tail of the positive plate. In which, d₁ of each of m₁ positive lugs in the plurality of positive lugs is increased or decreased by a first interval value corresponding to the positive lug; and/or the multiple negative lugs form the lug staggered structure, where a distance between each of the negative lugs other than a first negative lug and a head of the negative plate is indicated by d₂, d₂ of each of m₂ negative lugs in the multiple negative lugs is increased or decreased by a second interval value corresponding to the negative lug.

Furthermore, according to an embodiment of the present invention, the multiple negative lugs are arranged in parallel in a direction along a length of the negative plate. a second lug margin x₂ indicates a distance between the first negative lug and the head of the negative plate, with d₂=n₂w-x₂+(0.5πt∑n₂-0.5πt) or d₂=n₄w+x₂+[0.5πt∑(n₄+1)-0.5πt]. The multiple negative lugs form the lug laminated structure. The first negative lug is the one of the negative lugs which is located closest to the head of the negative plate. n₂ indicates that a negative lug is located at the n₂-th w on the negative plate along a direction from the head to a tail of the negative plate. n₄ indicates that a negative lug is located at the (n₄+1)-th w on the negative plate along the direction from the head to the tail of the negative plate.

Furthermore, according to an embodiment of the present invention, intervals between adjacent staggered positive lugs in the m₁ positive lugs are the same.

Furthermore, according to an embodiment of the present invention, starting from the first one in the m₁ positive lugs, d₁ of each of the m₁ positive lugs is decreased by a first interval value mq, where d₁=n₁w+x₁+[0.5πt∑(n₁-0.5πt), q indicates an interval between two adjacent staggered positive lugs, m indicates a sequence number of a positive lug in the m₁ positive lugs along a direction from the head to the tail of the positive plate, 1≤m≤m₁.

Furthermore, according to an embodiment of the present invention, starting from the first one in the m₁ positive lugs, d₁ of each of the m₁ positive lugs is increased by a first interval value mq; where d₁=n₃w+x₁+[0.5πt∑(n₃+1)-0.5πt], q indicates an interval between two adjacent staggered positive lugs, m indicates a sequence number of a positive lug in the m₁ positive lugs along a direction from the head to tail of the positive plate 1≤m≤m₁.

Furthermore, according to an embodiment of the present invention, intervals between adjacent staggered negative lugs in the m₂ negative lugs are the same.

Furthermore, according to an embodiment of the present invention, starting from the first one in the m₂ negative lugs, d₂ of each of the m₂ negative lugs is decreased by a first interval value mq; where d₂=n₂w-x₂+(0.5πt∑n₂-0.5πt), q indicates an interval between two adjacent staggered negative lugs, m indicates a sequence number of a negative lug in the m₂ negative lugs along a direction from the head to the tail of the negative plate relative to the winding direction, 1≤m≤m₂.

Furthermore, according to an embodiment of the present invention, starting from the first one in the m₂ negative lugs, d₂ of each of the m₂ negative lugs is increased by a the first interval value mq; where d₂=n₄w+x₂+[0.5πt∑(n₄+1)-0.5πt], q indicates an interval between two adjacent staggered negative lugs, m indicates a sequence number of a negative lug in the m₂ negative lugs along a direction from the head to the tail of the negative plate, 1≤m≤m₂.

Furthermore, according to an embodiment of the present invention, the first lug margin x₁ is less than or equal to 0.5w, and the second lug margin x₂ is less than or equal to 0.5w.

Furthermore, according to an embodiment of the present invention, the width w of the cell is greater than or equal to 5cm and is less than or equal to 20cm.

Furthermore, according to an embodiment of the present invention, a distance between the tail of the positive plate relative to the winding direction and a positive lug closest to the tail of the positive plate is less than 8w, and a distance between the tail of the negative plate and a negative lug closest to the tail of the negative plate is less than 8w.

Furthermore, according to an embodiment of the present invention, the positive lug is made of aluminum or aluminum-nickel alloy, and the negative lug is made of nickel, copper or copper-nickel alloy.

Furthermore, according to an embodiment of the present invention, the multiple positive lugs are welded together by using ultrasonic; and the multiple negative lugs are welded together by using ultrasonic.

Furthermore, according to an embodiment of the present invention, the positive plate is coated with positive electrode slurry which is made by mixing a positive electrode powder, a conductive agent, an adhesive and an additive, and the negative plate is coated with negative electrode slurry which is made by mixing a negative electrode powder, a conductive agent, an adhesive and an additive.

A lithium-ion battery is provided, which includes a battery case and the above-described lithium-ion battery cell in the battery case.

Furthermore, according to an embodiment of the present disclosure, the battery case is made of aluminum.

With the lithium-ion battery cell and the lithium-ion battery according to the present disclosure, the rate performance of the battery is improved, and the consistency of the battery cell is improved, thereby facilitating grouping and modularized expansion, thus ensuring a stable operation and prolonging the service life. In addition, the safety performance and the production efficiency are improved, occurrence of burrs at the edge of the plate and the self-discharging rate are reduced, thereby improving stability of the battery.

### BRIEF DESCRIPTION OF THE DRAWINGS

In order to more clearly describe the technical solution in the embodiments of the present disclosure or the technical solution in the conventional technology, drawings to be used in the embodiments of the present disclosure or in the conventional technology are briefly described hereinafter. It is apparent that the drawings described below show merely the embodiments of the present disclosure, and those skilled in the art may obtain other drawings according to the provided drawings without any creative effort.
Figure 1A and Figure 1B are schematic diagrams respectively showing a positive plate in a unfolded state and a negative plate in a unfolded state of a lithium-ion battery cell according to the present invention, where Figure 1A shows a positive plate, and Figure 1B shows a negative plate;
Figure 2A and Figure 2B are schematic diagrams respectively showing a positive plate in a unfolded state and a negative plate in a unfolded state of another lithium-ion battery cell according to the present invention, where Figure 2A shows a positive plate, and Figure 2B shows a negative plate;
Figure 3 is a schematic diagram showing a lithium-ion battery cell according to an embodiment of the present invention;
Figure 4 is a schematic diagram showing a lithium-ion battery cell according to another embodiment of the present invention;
Figure 5 is a schematic diagram showing coating and positions of lugs of a lithium-ion battery cell according to the present invention;
Figure 6 is a diagram showing plate coating and lug distribution of a lithium-ion battery cell according to the present invention;
Figure 7 is a diagram showing arrangement of a plate with an interval of 0.5cm between two positive lugs of a lithium-ion battery cell according to the present invention;
Figure 8 is a diagram showing arrangement of a negative plate with three lugs of a lithium-ion battery cell according to the present invention; and
Figure 9 is a diagram showing arrangement positions of lugs with an laminated structure and a staggered structure of the lithium-ion battery cell not according to the present invention.

### DETAILED DESCRIPTION OF EMBODIMENTS

The present disclosure is described more fully hereinafter with reference to the drawings, in which exemplary embodiments of the present disclosure are described. The technical solutions in the embodiments of the present disclosure are described clearly and completely in conjunction with the accompanying drawings in the embodiments of the present disclosure hereinafter. It is apparent that the below-described embodiments are merely some rather than all of embodiments of the present disclosure. All other embodiments obtained by those skilled in the art based on the embodiments in the present disclosure without any creative work should fall within the protection scope of the present disclosure. The technical solutions of the present disclosure are described in various aspects with reference to the drawings and the embodiments. The invention is defined in the appendend claims.

Hereinafter, for convenience of description, the terms "left", "right", "upper" and "lower" in the following description are consistent with the left, right, upper, and lower directions of the drawings themselves. The terms "front end", "back end" or "tail end" and the like means the left and right side of the figure itself. In the present disclosure, the words "first", "second" and the like are only used to distinguish in description and have no other special meanings.

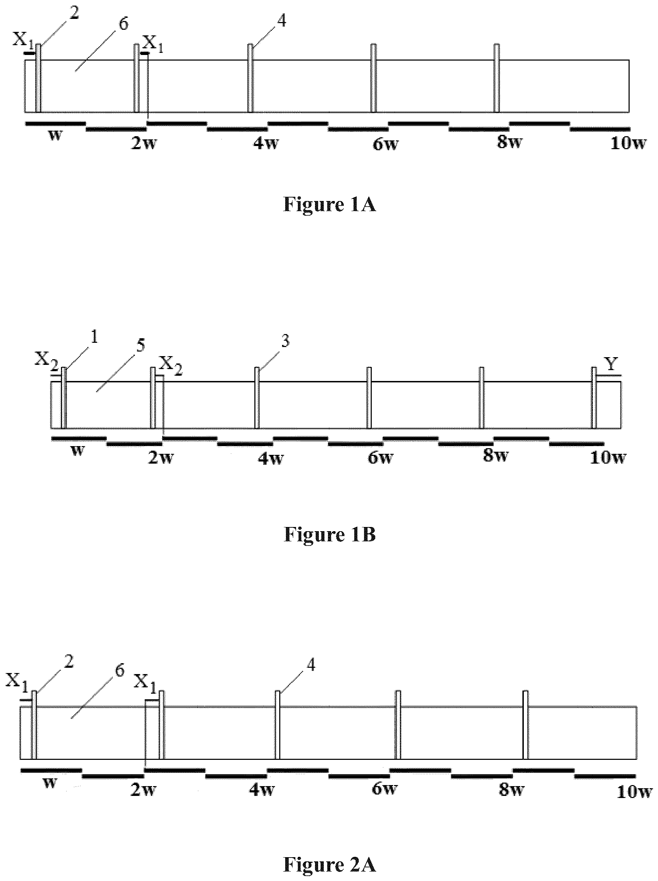

As shown in Figure 1A to Figure 4, a lithium-ion battery cell is provided according to the present disclosure. Multiple positive lugs are arranged sequentially on a positive plate in an unfolded state. Multiple negative lugs are arranged sequentially on a negative plate in an unfolded state. The positive plate and the negative plate are separated by a membrane and are wound to form the lithium-ion battery cell through a winding manner. The multiple positive lugs may form a lug laminated structure or a lug staggered structure. The multiple negative lugs may form a lug laminated structure or a lug staggered structure. The multiple positive lugs and the multiple negative lugs may be located at one end of the lithium-ion battery cell, and may also be respectively located at two ends of the lithium-ion battery cell.

The lithium-ion battery cell according to the present disclosure is provided with at least one positive lug and at least one negative lug, such that the battery has a good large-current discharge performance, the density of the lugs may be determined according to actual needs. A multiple-lugs wound design is adopted rather than a laminated design, thereby greatly reducing occurrence of burrs at the edge of the plate and reducing the self-discharge rate, thus improving the stability of the battery.

In an embodiment, as shown in Figure 1A, the multiple positive lugs are arranged in parallel in a direction along a length of the positive plate 6. A first lug margin x₁ indicates a distance between a first positive lug 2 and a head of the positive plate 6. The head of the positive plate 6 indicates the left end of the positive plate 6, and the first positive lug 2 is located close to the head of the positive plate 6. Generally, the lugs are not arranged at the leftmost or rightmost of the cell, and lug margins are provided to facilitate package of the cell and prevent occurrence of short circuits. The lug margin indicates a distance from the lug to the edge of the cell.

A distance between each of the multiple positive lugs other than the first positive lug and the head of the positive plate 6 is indicated by d₁, where d₁=n₁w-x₁+(0.5πt∑n₁-0.5πt). t indicates a sum of thicknesses of the positive plate, the membrane and the negative plate, that is, a minimum thickness of the winding. w indicates a width of the cell, that is, a width of the innermost layer of the cell. n₁ indicates that a positive lug is located at the n₁-th w on the positive plate along a direction from the head to a tail of the positive plate 6, where n₁≥2.

For example, in a case of calculating d₁ of the positive lug 4, n₁ is 4, the positive lug 4 is located at the fourth w on the positive plate 6, where d₁=4w-x₁+(0.5πt∑4-0.5πt) and ∑4=1+2+3+4=10. Values of other parameters are substituted into the equation, to calculate d₁ of the positive lug 4, and d₁ of each of other positive lugs may be calculated by analogy.

As shown in Figure 1B, the multiple negative lugs are arranged in parallel in a direction along a length of the negative plate 5. A second lug margin x₂ indicates a distance between a first negative lug 1 and the head of the negative plate 5. A distance between each of the multiple negative lugs other than the first negative lug and the head of the negative plate 5 is indicated by d₂, where d₂=n₄w+x₂+(0.5πt∑n₂-0.5πt). n₂ indicates that a negative lug is located at the n₂-th w on the negative plate 5 along a direction from a head to a tail of the negative plate 5, where n₂≥2.

For example, in a case of calculating d₂ of the negative lug 3, n₂ is 4, the negative lug 3 is located at the fourth w on the negative plate 5, where d₂=4w-x₂+(0.5πt∑4-0.5πt) and ∑4=1+2+3+4=10. Values of other parameters are substituted into the equation, to calculate d₂ of the negative lug 3, and d₂ of each of other negative lugs may be calculated by analogy.

In an embodiment, as shown in Figure 2A, the multiple positive lugs are arranged in parallel in a direction along the length of the positive plate 6, and the first lug margin x₁ indicates the distance between the first positive lug 2 and the head of the positive plate 6. The distance between each of the multiple positive lugs other than the first positive lug and the head of the positive plate 6 is indicated by d₁, where d₁=n₃w+x₁+[0.5πt∑(n₃+1)-0.5πt]. n₃ indicates that a positive lug is located at the (n₃+1)-th w on the positive plate 6 along the direction from the head to the tail of the positive plate 6.

For example, in a case of calculating d₁ of the positive lug 4, n₃ is 4, the positive lug 4 is located at the fifth w on the positive plate, where d₁=4w+x₁+[0.5πt∑(4+1)-0.5πt] and ∑4=1+2+3+4=10. Values of other parameters are substituted into the equation, to calculate d₁ of the positive lug 4, and d₁ of each of other positive lugs may be calculated by analogy.

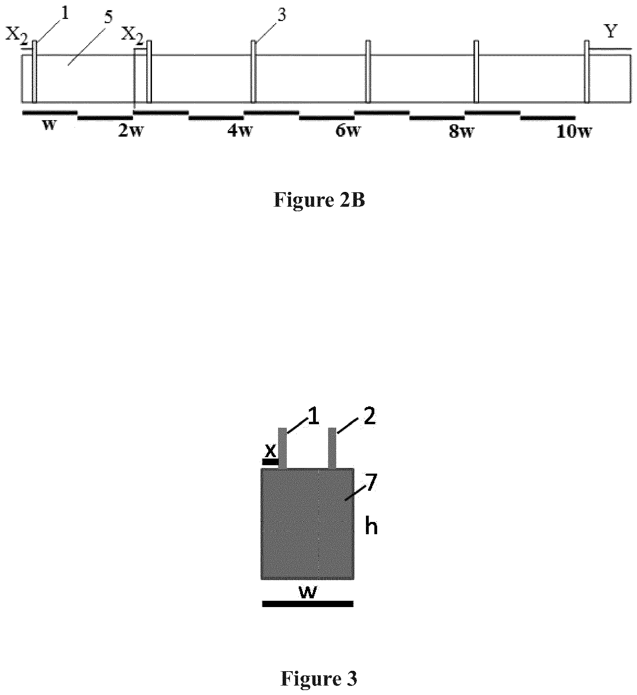

As shown in Figure 2B, the multiple negative lugs are arranged in parallel in a direction along a length of the negative plate 5. A second lug margin x₂ indicates a distance between the first negative lug 1 and the head of the negative plate 5. A distance between each of the multiple negative lugs other than the first negative lug and the head of the negative plate 5 is indicated by d₂, where d₂=n₄w+x₂+[0.5πt∑(n₄+1)-0.5πt]. n₄ indicates that a negative lug is located at the (n₄+1)-th w on the negative plate 5 along the direction from the head to the tail of the negative plate 5.

For example, in a case of calculating d₂ of the negative lug 3, n₄ is 4, the negative lug 3 is located at the fifth w on the negative plate 5, where d₂=4w+x₁+[0.5πt∑(4+1)-0.5πt] and ∑4=1+2+3+4=10. Values of other specific parameters are substituted into the equation, to calculate d₂ of the negative lug 3, and d₂ of each of other negative lugs may be calculated by analogy.

The lithium-ion battery cell is square, and a membrane is arranged between the positive plate 6 and the negative plate 5, two or more layers of the membranes may be arranged. After the lithium-ion battery cell 7 is formed by winding with a winding pin, the multiple positive lugs may form a lug laminated structure and the multiple negative lugs may form a lug laminated structure. As shown in Figure 3, after the winding, the positive lugs are neatly laminated at one end of the cell 7, and the negative lugs are neatly laminated at the same end of the cell 7 as the positive lugs, where x indicates the lug margin.

The first lug margin x₁ and the second lug margin x₂ may be the same or different. The first lug margin x₁ is less than or equal to 0.5w, and the second lug margin x₂ is less than or equal to 0.5w. w indicates a width of the cell, and the width w of the cell is greater than or equal to 5cm and less than or equal to 20cm. h indicates a height, a range of h is 5cm≤h≤20cm. A cell thickness is indicated by d, and a range of d is 0.5cm≤d≤5cm. A length L1 of the negative plate and a length L2 of the positive plate meet 10w≤L1,L2≤200w. y indicates a length of the tail, where 0≤y<8w.

The lithium-ion battery cell in the above embodiment adopts a winding manner. After the first lug is arranged, positions of the second lug and subsequent lugs may be calculated through the equation nw-x+(0.5πt∑n-0.5πt) or nw+x+[0.5πt∑(n+1)-0.5πt].

The above two equations are used to calculate the positions of the second and subsequent positive and negative lugs. During calculating a specific position, x is replaced by x₁ or x₂, and n is replaced by n₁, n₂, n₃ or n₄. A position of a lug calculated through nw+x+[0.5πt∑(n+1)-0.57πt is behind the n-th w, and a position of a lug calculated through nw-x+(0.5πt∑n-0.57πt) is in front of the (n+1)-th w.

In an embodiment, a current collector of the positive plate is aluminum foil, and a current collector of the negative plate is copper foil. The aluminum foil is continuously and uniformly coated with positive electrode slurry containing a lithium-ion active material to form the positive plate, and the copper foil is continuously and uniformly coated with negative electrode slurry containing a lithium-ion active material to form the negative plate. Uncoated regions are reserved on the coated sides of the positive and negative plates for arranging the positive and negative lugs respectively. After the winding, two or more lugs are welded together by using ultrasonic, or the lugs are directly welded to a transition metal plate, and the transition metal plate is welded to a top cover of the battery case subsequently.

The cell is formed with a winding manner by welding multiple lugs, such that the rate performance of a large and medium-sized lithium-ion battery is improved, and good consistency and stability of the battery can be obtained, thereby facilitating grouping and modularized expansion, thus ensuring a stable operation of the system and prolonging a service life of the system.

After the positions of the lugs are calculated through the above equations, the lugs are moved forward or backward by a certain distance to form a lug staggered structure. d₁ of each of the m₁ positive lugs in the multiple positive lugs is increased or decreased by a first interval value corresponding the positive lug, such that the multiple positive lugs form a lug staggered structure. That is, there are m₁ positive lugs being staggered in the multiple laminated positive lugs, where m₁ may be 1, 2, 3 and the like. Intervals between adjacent staggered positive lugs may be the same or different.

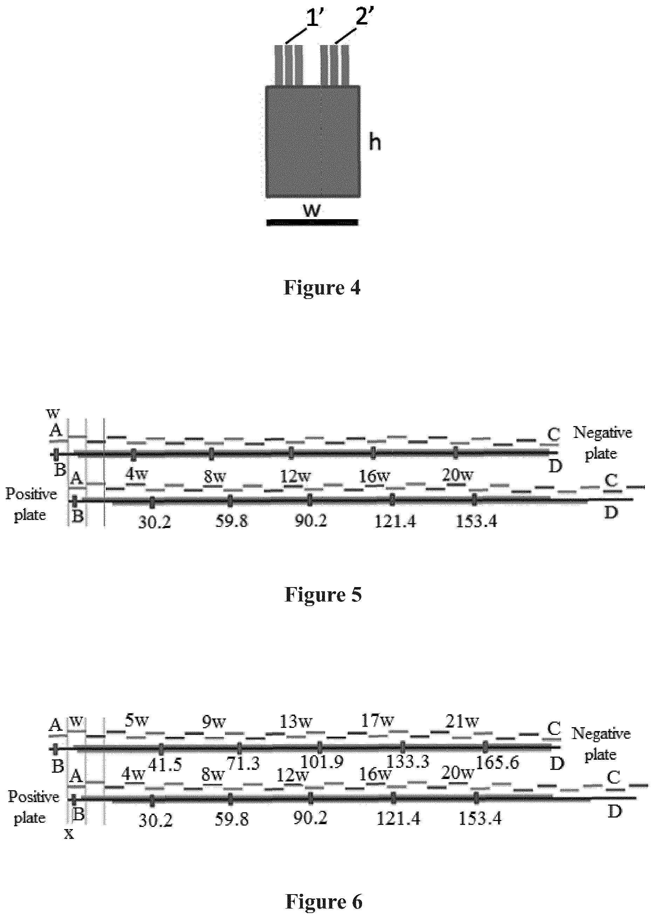

The multiple negative lugs may form a lug staggered structure. d₂ of each of the m₂ negative lugs in the multiple negative lugs is increased or decreased by a second interval value corresponding the negative lug, such that there are m₂ negative lugs being staggered in the multiple laminated negative lugs, where m₂ may be 1, 2, 3 and the like. Intervals between adjacent staggered negative lugs may be the same or different. For example, the arrangement 1' of the negative electrode and the arrangement 2' of the positive electrode in Figure 4 are in a staggered manner.

In an embodiment, the intervals between adjacent staggered positive lugs in the m₁ positive lugs are the same. Starting from the first one in the m₁ positive lugs, d₁ of each of the m₁ positive lugs is decreased by a first interval value mq. Where d₁=n₁w-x₁+(0.5πt∑n₁-0.5πt), q indicates an interval between two adjacent staggered positive lugs, and m indicates a sequence number of a positive lug in the m₁ positive lugs along a direction from the head to the tail of the positive plate, where 1≤m≤m₁.

Alternatively, starting from the first one in the m₁ positive lugs, d₁ of each of the m₁ positive lugs is increased by a first interval value mq. Where d₁=n₃w+x₁+[0.5πt∑(n₃+1)-0.5πt], q indicates an interval between two adjacent staggered positive lugs, m indicates a sequence number of a positive lug in the m₁ positive lugs along a direction from the head to the tail of the positive plate, where 1≤m≤m₁.

The intervals between adjacent staggered negative lugs in the m₂ negative lugs are the same. Starting from the first one in the m₂ negative lugs, d₂ of each of the m₂ negative lugs is decreased by a first interval value mq. Where d₂=n₂w-x₂+(0.5πt∑n₂-0.5πt), q indicates an interval between two adjacent staggered negative lugs, m indicates a sequence number of a negative lug in the m₂ negative lugs along a direction from the head to the tail of the negative plate, where 1≤m≤m₂.

Alternatively, starting from the first one in the m₂ negative lugs, d₂ of each of the m₂ negative lugs is increased by a first interval value mq. Where d₂=n₄w+x₂+[0.5πt∑(n₄+1)-0.5πt], q indicates an interval between two adjacent staggered negative lugs, m indicates a sequence number of a negative lug in the m₂ negative lugs along a direction from the head to the tail of the negative plate, where 1≤m≤m₂.

A case where the lugs of the lithium-ion battery cell are laminated meets the following equations nw+x+[0.5πt∑(n+1)-0.5πt and nw-x+(0.5πt∑n-0.5πt). Based on the above two equations, the lugs are moved forward or backward by a certain distance. Starting from the first one in the lugs with incremented sequence numbers, a position of the lug is moved inward or outward by mq, where m=1, 2, 3,.... For the first lug, m=1, for the second lug, m=2, and for other cases, m may be determined by analogy, where q indicates an interval between two lugs (0<q <5cm).

The lugs are staggered and an interval between two adjacent lugs is indicated by q. If the first lug is in the middle, a lug on the left is moved outward by q, and a lug on the right is moved inward by q. For the lugs whose positions are calculated through nw-x+(0.5πt∑n-0.5πt), since the lugs are located behind the nw, it is required to moved forward the lugs starting from the second lug. For the lugs whose positions are calculated through nw+x+[0.5πt∑(n+1)-0.5πt], since the lugs are located in front of the (n+1)w, it is required to move backward the lugs starting from the second lug.

A lithium-ion battery is further provided according to the present disclosure, which includes a battery case and the lithium-ion battery cell as described above located in the battery case. The negative lugs and the positive lugs are located on the same side of the battery cell, the positive and negative lugs may be connected to an electrode pillar of the battery case by a bolt or through a riveting process. The battery case is made of aluminum.

The positive plate is coated with positive electrode slurry, the positive electrode slurry is made by mixing a positive electrode powder, a conductive agent, an adhesive and an additive. The negative plate is coated with negative electrode slurry, the negative electrode slurry is made by mixing a negative electrode powder, a conductive agent, an adhesive and an additive. In order to avoid occurrence of lithium precipitation at a negative electrode due to a positive electrode corresponding to a negative lug, in addition to coating a glue to protect the negative lug, the performance of the slurry is improved to avoid the occurrence of lithium precipitation.

In an embodiment, both thicknesses of a side wall and a front wall of the aluminum case are 0.3mm. A thickness of a bottom is 0.6mm. A thickness d of the cell is designed to be 0.82cm. A width of the positive plate is 14cm. A width of the negative plate is 14.2cm. A width of the membrane is 14.5cm .

The positive active material is a ternary material and has a specific capacity of 150mAh/g. The negative active material is artificial graphite or composite graphite, and has a specific capacity of 345mAh/g, and a capacity of the negative electrode is excessive by 4%. The composition of the positive electrode slurry is: 95.5% of the ternary material, 2% of the adhesive, 1.5% of the conductive agent and 1% of a nano inorganic functional additive. The compacted density is 3.6g/cm³, a thickness of a single-layer coating is 0.064mm, the surface density is 461g/m², a thickness of the current collector aluminum foil is 0.012mm, and the calculated unit capacity is 7.224mAh/cm².

The composition of the negative electrode slurry is: 95.5% of the ternary material, 1.2% of a thickener, 1.5% of the adhesive, 1% of the conductive agent and 0.8% of a nano inorganic functional additive. The compacted density is 1.5g/cm³, a thickness of a single-layer coating is 0.070mm, a surface density is 224g/m², a thickness of the current collector aluminum foil is 0.009mm, and the calculated unit capacity is 7.4mAh/cm². t is 0.33mm.

Based on the thicknesses of the cell, the positive and negative plates and the membrane, a length of a plate with a coating is 175cm, specific coating sizes are shown in the following table 1, and the capacity of the battery is 35Ah. The schematic diagram of coating is as shown in Figure 5, where x is set to 1.5cm, a width of the lug is 1.5cm, and w is calculated as 7cm (a width of the innermost unit roll layer after the winding pin is pulled out).

**Table 1 list of coating sizes of the positive and negative plates**

| | A | B | C | D | Total length of the plate |
|---|---|---|---|---|---|
| Negative plate | 8 | 11.5 | 3 | 3 | 188 |
| Positive plate | 4.7 | 14.8 | 28 | 14.4 | 205.9 |

In order to design a lug laminated structure, the positive and negative plates are respectively provided with six lugs. Positions of the lugs may be calculated through the following equation nw+x+[0.5πt∑(n+1)-0.5πt]. The calculated positions of the lugs are as shown in Figure 5 (the interval between the positive lugs is the same as the interval between the negative lugs). The lugs may be directly welded to the aluminum cover, or may be first welded to a large transition metal plate, and the transition metal plate is welded to the aluminum cover.

In order to avoid occurrence of lithium precipitation of a negative lug, in addition to coating a glue to protect the negative lug, the performance of the slurry is improved to avoid the occurrence of lithium precipitation. A highly wet negative active material such as a lightly oxidized graphite material may be used. A silicon carbon negative electrode material may be used, which has a certain absorption effect on increase of the capacity.

In an embodiment, the positions of the positive lugs are the same as the positions of the positive lugs in Figure 5, and the positions of the negative lugs are set according to the following equation nw-x+(0.5πt∑n-0.5πt), which are as shown in Figure 6.

In an embodiment, the lugs of the lithium-ion battery cell are staggered, each of the positive plate and negative plate is provided with two lugs, where an interval between the lugs is 0.5cm. for a case where the lugs are distributed based on the following equation nw-x+(0.5πt∑n-0.5πt), a staggered arrangement is formed by moving one of the lugs forward by 0.5cm, where intervals between the staggered lugs are the same.

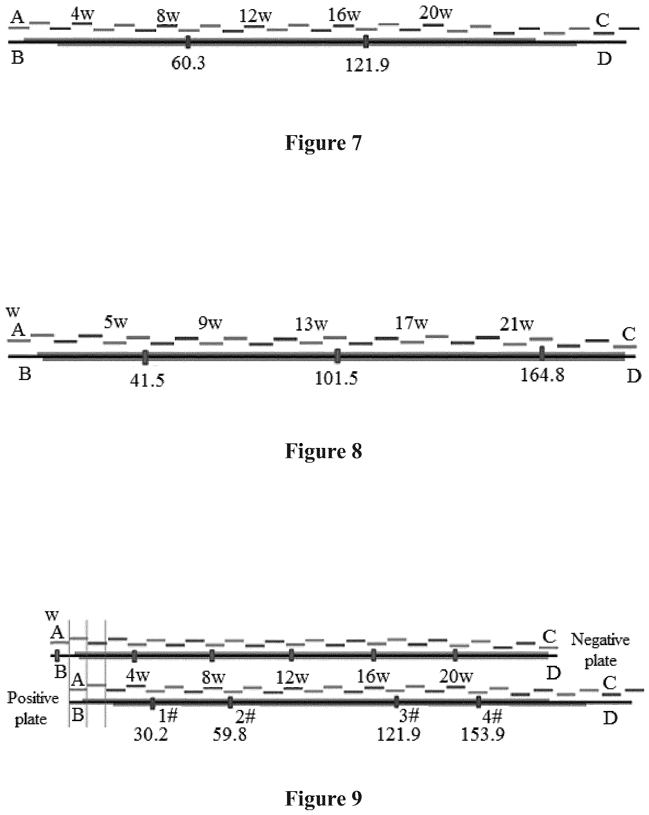

For a case where the lugs are distributed based on the following equation nw+x+[0.5πt∑(n+1)-0.5πt], a staggered arrangement is formed by moving one of the lugs backward by 0.5cm. For example, for a positive lug with a position calculated through nw+x+[0.5πt∑(n+1)-0.5πt], if n=8, the lug is at a position of 60.3cm; if n=16, the lug is at a position of 121.9cm, the positions of the lugs are as shown in Figure 7.

In an embodiment, the lugs of the lithium-ion battery cell are staggered. Each of the positive plate and negative plate is provided with three lugs, where each lug has a width of 1cm, and intervals of the staggered lugs are 0.4cm. For the negative plate in which a position of a lug is calculated through the following equation nw-x+(0.5πt∑n-0.5πt), the first lug is at a position of n=6. The next lug is at a position moved forward by 0.4cm from a position of n=14. The third lug is at a position moved forward by 0.8cm from a position of n=22. The positions of the negative lugs are as shown in Figure 8. The positions of the positive lugs are similar to that of the negative lugs.

In an embodiment not according to the invention, the lugs of the lithium-ion battery cell have a lug laminated structure or a lug staggered structure. Two groups of lugs are laminated, and intervals between the staggered lugs are 0.5cm. The laminated lugs are located at positions calculated through the following equation nw+x+[0.5πt∑(n+1)-0.5πt], and the staggered lugs are located at positions calculated through the following equation nw+x+[0.5πt∑(n+1)-0.5πt]+0.5. As shown in Figure 9, n for the laminated lugs are 4 and 8 (corresponding to positions of 30.2cm and 59.8cm), and n for another group of the laminated lugs are 16 and 20 (corresponding to positions of 121.9cm and 153.9cm). In other words, the laminated lugs are located at positions calculated through the following equation nw-x+(0.5πt∑n-0.5πt), and the staggered lugs are located at positions calculated through the following equation nw-x+(0.5πt∑n-0.5πt)-0.5.

In the above embodiments, the lithium-ion battery cell and the lithium-ion battery adopt a multi-lug design, which greatly improves the rate performance of the battery. With the multi-lug design based on the winding manner, the consistency of the cell is improved, thereby facilitating grouping and modularized expansion, thus ensuring the stable operation of the system and prolonging the service life of the system. In order to avoid the complicated process of blanking a region on the positive region corresponding to the negative lug, a simple method of improving the composition of the slurry is adopted, thereby avoiding the occurrence of lithium precipitation at the negative electrode, thus improving the production efficiency while improving the safety performance. The winding multi-lug design is adopted instead of the laminated design, thereby greatly reducing the occurrence of burrs at the edge of the plate and reducing the self-discharging rate, thus improving the stability of the battery.

The method and the system of the present disclosure may be implemented in many ways. For example, the method and the system of the present disclosure may be implemented by software, hardware, firmware or any combination of the software, the hardware and the firmware. The above sequence of steps used in the method is only for illustration, and the steps of the method of the present disclosure are not limited to the above-described specific order unless otherwise specified. In addition, in some embodiments, the present disclosure may also be implemented as programs recorded in a recording medium, the programs include machine-readable instructions for implementing the method according to the present disclosure. Thus, the present disclosure also covers a recording medium storing a program for executing the method according to the present disclosure.

## Claims

1. A lithium-ion battery cell, comprising:
a positive plate;
a membrane; and
a negative plate, wherein
a plurality of positive lugs is arranged along a winding direction on the positive plate in a unfolded state, a plurality of negative lugs is arranged along the winding direction on the negative plate in a unfolded state, and
the positive plate and the negative plate are separated by the membrane and are wound to form the lithium-ion battery cell, the plurality of positive lugs forms a lug laminated structure, and the plurality of negative lugs forms a lug laminated structure,
and wherein the plurality of positive lugs is arranged in parallel in a direction along a length of the positive plate;
a first lug margin x₁ indicates a distance between a first positive lug and a head of the positive plate relative to the winding direction, a distance between each of the positive lugs other than the first positive lug and the head of the positive plate is indicated by d₁, with d₁=n₁w-x₁+(0.5πt∑n₁-0.5πt) or d₁=n₃w+x₁+[0.5πt∑(n₃+1)-0.5πt];
the lithium-ion battery cell is square, and the plurality of positive lugs forms the lug laminated structure;
where t indicates a sum of thicknesses of the positive plate, the membrane and the negative plate, w indicates a width of the cell, the first positive lug is the one of the positive lugs which is located closest to the head of the positive plate, n₁ indicates that a positive lug is located at the n₁-th w on the positive plate along a direction from the head to a tail of the positive plate, and n₃ indicates that a positive lug is located at the (n₃+1)-th w on the positive plate along the direction from the head to the tail of the positive plate.

2. The lithium-ion battery cell according to claim 1, wherein
the plurality of negative lugs is arranged in parallel in a direction along a length of the negative plate;
a second lug margin x₂ indicates a distance between the first negative lug and the head of the negative plate, a distance between each of the negative lugs other than the first negative lug and the head of the negative plate is indicated by d₂, with d₂=n₄w-x₂+(0.5πt∑n₂-0.5πt) or d₂=n₄w+x₂+[0.5πt∑(n₄+1)-0.5πt];
the plurality of negative lugs forms the lug laminated structure;
the first negative lug is the one of the negative lugs which is located closest to the head of the negative plate;
where n₂ indicates that a negative lug is located at the n₂-th w on the negative plate along a direction from the head to a tail of the negative plate relative to the winding direction, and n4 indicates that a negative lug is located at the (n₄+1)-th w on the negative plate along the direction from the head to the tail of the negative plate.

3. The lithium-ion battery cell according to claim 2, wherein
the first lug margin x₁ is less than or equal to 0.5w; and
the second lug margin x₂ is less than or equal to 0.5w.

4. The lithium-ion battery cell according to claim 2, wherein the width w of the cell is greater than or equal to 5cm and is less than or equal to 20cm.

5. The lithium-ion battery cell according to claim 2, wherein
a distance between the tail of the positive plate relative to the winding direction and a positive lug closest to the tail of the positive plate is less than 8w; and
a distance between the tail of the negative plate and a negative lug closest to the tail of the negative plate is less than 8w.

6. A lithium-ion battery cell, comprising:
a positive plate;
a membrane; and
a negative plate, wherein
a plurality of positive lugs is arranged along a winding direction on the positive plate in a unfolded state, a plurality of negative lugs is arranged along the winding direction on the negative plate in unfolded state, and
the positive plate and the negative plate are separated by the membrane and are wound to form the lithium-ion battery cell, the plurality of positive lugs forms a lug staggered structure, and the plurality of negative lugs forms a lug staggered structure;
wherein
wherein intervals between adjacent staggered positive lugs in m1 positive lugs are the same; starting from the first one in the m₁ positive lugs, d1 of the m₁ positive lugs is decreased by a first interval value mq; wherein d₁=n₁w-x₁+(0.5πt∑n₁-0.5πt), q indicates an interval between two adjacent staggered positive lugs, m indicates a sequence number of a positive lug in the m1 positive lugs along a direction from the head to the tail of the positive plate, 1≤m≤m_{1;} or
starting from the first one in the m₁ positive lugs, d1 of each of the m₁ positive lugs is increased by a first interval value mq; wherein d₁=n₃w+x₁+[0.5πt∑(n₃+1)-0.5πt], q indicates an interval between two adjacent staggered positive lugs, m indicates a sequence number of a positive lug in the m₁ positive lugs along a direction from the head to tail of the positive plate 1≤m≤m; where t indicates a sum of thicknesses of the positive plate, the membrane and the negative plate, w indicates a width of the cell, the first positive lug is the one of the positive lugs which is located closest to the head of the positive plate, n₁ indicates that a positive lug is located at the n₁-th w on the positive plate along a direction from the head to a tail of the positive plate, and n₃ indicates that a positive lug is located at the (n₃+1)-th w on the positive plate along the direction from the head to the tail of the positive plate.

7. The lithium-ion battery cell according to claim 6, wherein intervals between adjacent staggered negative lugs in m2 negative lugs are the same.

8. The lithim-ion battery cell according to claim 7, wherein
starting from the first one in the m2 negative lugs, d₂ of each of the m2 negative lugs is decreased by a first interval value mq;
wherein d₂=n₂w-x₂+(0.5πt∑n₂-0.5πt), q indicates an interval between two adjacent staggered negative lugs, m indicates a sequence number of a negative lug in the m₂ negative lugs along a direction from the head to the tail of the negative plate relative to the winding direction, 1≤m≤m₂.

9. The lithium-ion battery according to claim 7, wherein
starting from the first one in the m2 negative lugs, d₂ of each of the m₂ negative lugs is increased by a first interval value mq;
wherein d₂=n₄w+x₂+[0.5πt∑(n₄+1)-0.5πt], q indicates an interval between two adjacent staggered negative lugs, m indicates a sequence number of a negative lug in the m₂ negative lugs along a direction from the head to the tail of the negative plate, 1≤m≤m₂.

10. A lithium-ion battery, comprising a battery case and the lithium-ion battery cell, according to claim 1 or 6, in the battery case.

11. The lithium-ion battery according to claim 10, wherein the battery case is made of aluminum.

## Patentansprüche

1. Lithium-Ionen-Batteriezelle, umfassend:
eine positive Platte;
eine Membran; und
eine negative Platte, wobei
eine Vielzahl von positiven Laschen entlang einer Wickelrichtung auf der positiven Platte in einem ungefalteten Zustand angeordnet ist, eine Vielzahl von negativen Laschen entlang der Wickelrichtung auf der negativen Platte in einem ungefalteten Zustand angeordnet ist, und
die positive Platte und die negative Platte durch die Membran getrennt sind und gewickelt sind, um die Lithium-Ionen-Batteriezelle zu bilden, die Vielzahl von positiven Laschen eine laminierte Laschenstruktur bildet und die Vielzahl von negativen Laschen eine laminierte Laschenstruktur bildet,
und wobei die Vielzahl von positiven Laschen parallel in einer Richtung entlang einer Länge der positiven Platte angeordnet ist;
ein erster Laschenrand x₁ einen Abstand zwischen einer ersten positiven Lasche und einem Kopf der positiven Platte in Bezug auf die Wickelrichtung angibt, ein Abstand zwischen jeder der positiven Laschen außer der ersten positiven Lasche und dem Kopf der positiven Platte durch d₁ angegeben ist, wobei d₁=n₁w-x₁+(0,5πt∑n₁-0,5πt) oder d₁=n₃w+x₁+[0,5πt∑(n₃+1)-0.5πt];
die Lithium-Ionen-Batteriezelle quadratisch ist, und die Vielzahl von positiven Laschen die laminierte Laschenstruktur bildet;
wobei t eine Summe von Stärken der positiven Platte, der Membran und der negativen Platte angibt, w eine Breite der Zelle angibt, die erste positive Lasche diejenige der positiven Laschen ist, die dem Kopf der positiven Platte am nächsten angeordnet ist, n₁ angibt, dass sich eine positive Lasche an dem n₁-ten w auf der positiven Platte entlang einer Richtung von dem Kopf zu einem Ende der positiven Platte befindet, und n₃ angibt, dass sich eine positive Lasche an dem (n₃+1)-th w auf der positiven Platte entlang der Richtung von dem Kopf zu dem Ende der positiven Platte befindet.

2. Lithium-Ionen-Batteriezelle nach Anspruch 1, wobei
die Vielzahl von negativen Laschen parallel in einer Richtung entlang einer Länge der negativen Platte angeordnet ist;
ein zweiter Laschenrand x₂ einen Abstand zwischen der ersten negativen Lasche und dem Kopf der negativen Platte angibt, ein Abstand zwischen jeder der negativen Laschen außer der ersten negativen Lasche und dem Kopf der negativen Platte durch d₂ angegeben ist, wobei d₂=n₂w-x₂+(0,5πt∑n₂-0,5πt) oder d₂=n₄w+x₂+[0,5πt∑(n₄+1)-0,5πt];
die Vielzahl von negativen Laschen die laminierte Laschenstruktur bildet;
die erste negative Lasche diejenige der negativen Laschen ist, die sich am nächsten zum Kopf der negativen Platte befindet;
wobei n₂ angibt, dass sich eine negative Lasche an dem n₂-ten w auf der negativen Platte entlang einer Richtung von dem Kopf zu einem Ende der negativen Platte in Bezug auf die Wicklungsrichtung befindet, und n₄ angibt, dass sich eine negative Lasche an dem (n₄+1)-ten w auf der negativen Platte entlang der Richtung von dem Kopf zu dem Ende der negativen Platte befindet.

3. Lithium-Ionen-Batteriezelle nach Anspruch 2, wobei
der erste Laschenrand x₁ kleiner als oder gleich wie 0,5 w ist; und
der zweite Laschenrand x₂ kleiner als oder gleich wie 0,5 w ist.

4. Lithium-Ionen-Batteriezelle nach Anspruch 2, wobei die Breite w der Zelle größer als oder gleich wie 5 cm und kleiner als oder gleich wie 20 cm ist.

5. Lithium-Ionen-Batteriezelle nach Anspruch 2, wobei
ein Abstand zwischen dem Ende der positiven Platte in Bezug auf die Wicklungsrichtung und einer positiven Lasche, die dem Ende der positiven Platte am nächsten ist, weniger als 8 w ist; und
ein Abstand zwischen dem Ende der negativen Platte und einer negativen Lasche, die dem Ende der negativen Platte am nächsten ist, weniger als 8 w ist.

6. Lithium-Ionen-Batteriezelle, umfassend:
eine positive Platte;
eine Membran; und
eine negative Platte, wobei
eine Vielzahl von positiven Laschen entlang einer Wickelrichtung auf der positiven Platte in einem ungefalteten Zustand angeordnet ist, eine Vielzahl von negativen Laschen entlang der Wickelrichtung auf der negativen Platte in einem ungefalteten Zustand angeordnet ist, und
die positive Platte und die negative Platte durch die Membran getrennt sind und gewickelt sind, um die Lithium-Ionen-Batteriezelle zu bilden, die Vielzahl von positiven Laschen eine versetzte Laschenstruktur bildet und die Vielzahl von negativen Laschen eine versetzte Laschenstruktur bildet;
wobei
wobei Intervalle zwischen benachbarten versetzten positiven Laschen in m₁ positiven Laschen gleich sind; beginnend mit der ersten in den m₁ positiven Laschen wird d₁ der m₁ positiven Laschen um einen ersten Intervallwert mq verringert; wobei d₁=n₁w-x₁+(0,5πt∑n₁-0,5πt), q ein Intervall zwischen zwei benachbarten versetzten positiven Laschen angibt, m eine laufende Nummer einer positiven Lasche in den m₁ positiven Laschen entlang einer Richtung von dem Kopf zu dem Ende der positiven Platte angibt, 1≤m≤m₁; oder
beginnend von der ersten in den m₁ positiven Laschen, d₁ jede der m₁ positiven Laschen um einen ersten Intervallwert mq erhöht wird; wobei d₁=n₃w+x₁+[0.5πt∑(n₃+1)-0.5πt]; q ein Intervall zwischen zwei benachbarten versetzten positiven Laschen angibt, m eine laufende Nummer einer positiven Lasche in den m₁ positiven Laschen entlang einer Richtung von dem Kopf zu dem Ende der positiven Platte angibt, 1≤m≤m₁ ; wobei t eine Summe von Stärken der positiven Platte, der Membran und der negativen Platte angibt, w eine Breite der Zelle angibt, die erste positive Lasche diejenige der positiven Laschen ist, die dem Kopf der positiven Platte am nächsten angeordnet ist, n₁ angibt, dass sich eine positive Lasche an dem n₁-ten w auf der positiven Platte entlang einer Richtung von dem Kopf zu einem Ende der positiven Platte befindet, und n₃ angibt, dass sich eine positive Lasche an dem (n₃+1)-ten w auf der positiven Platte entlang der Richtung von dem Kopf zu dem Ende der positiven Platte befindet.

7. Lithium-Ionen-Batteriezelle nach Anspruch 6, wobei Intervalle zwischen benachbarten versetzten negativen Laschen in m2 negativen Laschen gleich sind.

8. Lithium-Ionen-Batteriezelle nach Anspruch 7, wobei
beginnend von der ersten in den m2 negativen Laschen, d₂ von jeder der m₂ negativen Laschen um einen ersten Intervallwert mq verringert wird;
wobei d₂=n₂w-x₂+(0,5πt∑(n₄+1)-0,5πt), q ein Intervall zwischen zwei benachbarten versetzten negativen Laschen angibt, m eine laufende Nummer einer negativen Lasche in den m₂ negativen Laschen entlang einer Richtung von dem Kopf zu dem Ende der negativen Platte in Bezug auf die Wickelrichtung angibt. 1≤m≤m₂.

9. Lithium-Ionen-Batterie nach Anspruch 7, wobei
beginnend von der ersten in den m2 negativen Laschen, d₂ von jeder der m₂ negativen Laschen um einen ersten Intervallwert mq erhöht wird;
wobei d₂=n₄w+x₂+[0,5πt∑(n₄+1)-0,5πt], q ein Intervall zwischen zwei benachbarten versetzten negativen Laschen angibt, m eine laufende Nummer einer negativen Lasche in den m₂ negativen Laschen entlang einer Richtung von dem Kopf zu dem Ende der negativen Platte angibt.1≤m≤m₂.

10. Lithium-Ionen-Batterie, umfassend ein Batteriegehäuse und die Lithium-Ionen-Batteriezelle nach Anspruch 1 oder 6 in dem Batteriegehäuse.

11. Lithium-Ionen-Batterie nach Anspruch 10, wobei das Batteriegehäuse aus Aluminium gefertigt ist.

## Revendications

1. Élément de batterie au lithium-ion, comprenant :
une plaque positive ;
une membrane ; et
une plaque négative, dans lequel
une pluralité de pattes positifs est agencée selon une direction d'enroulement sur la plaque positive dans un état déplié, une pluralité de pattes négatives est agencée selon la direction d'enroulement sur la plaque négative dans un état déplié ; et
la plaque positive et la plaque négative sont séparées par la membrane et sont enroulées de façon à former l'élément de batterie au lithium-ion, la pluralité de pattes positives forme une structure de patte stratifiée, et la pluralité de pattes négatives forme une structure de patte stratifiée,
et dans lequel la pluralité de pattes positives est agencée en parallèle dans une direction le long d'une longueur de la plaque positive ;
un premier bord de patte x₁ indique une distance entre une première patte positive et une partie avant de la plaque positive par rapport à la direction d'enroulement, une distance entre chacune des pattes positives autre que la première patte positive et la partie avant de la plaque positive est indiquée par d₁, avec d₁=n₁w-x₁+(0,5πt∑n₁-0,5πt) ou d₁=n₃w+x₁+[0,5πt∑(n₃+1)-0,5πt] ;
l'élément de batterie au lithium-ion est carré, et la pluralité de pattes positives forme la structure de patte stratifiée ;
où t indique une somme de l'épaisseur de la plaque positive, de la membrane et de la plaque négative, w indique une largeur de l'élément, la première patte positive est celle des pattes positives qui est située le plus proche de la partie avant de la plaque positive, m indique qu'une patte positive est située au niveau de la n₁ème w sur la plaque positive le long d'une direction à partir de la partie avant jusqu'à la partie arrière de la plaque positive, et n₃ indique qu'une patte positive est située au niveau de la (n₃+1)ème w sur la plaque positive le long de la direction depuis la partie avant jusqu'à la partie arrière de la plaque positive.

2. Élément de batterie au lithium-ion selon la revendication 1, dans lequel
la pluralité de pattes négatives est agencée en parallèle dans une direction le long d'une longueur de la plaque négative ;
un second bord de patte x₂ indique une distance entre la première patte négative et la partie avant de la plaque négative, une distance entre chacune des pattes négatives autre que la première patte négative et la partie avant de la plaque négative est indiquée par d₂, avec d₂=n₂w-x₂+(0,5πt∑n₂-0,5πt) ou d₂=n₄w+x₂+[0,5πt∑(n₄+1)-0,5πt] ;
la pluralité de pattes négatives forme la structure de patte stratifiée ;
la première patte négative est celle des pattes négatives qui est située le plus proche de la partie avant de la plaque négative ;
où n₂ indique qu'une patte négative est située au niveau de la n₂ème w sur la plaque négative le long d'une direction depuis la partie avant jusqu'à une partie arrière de la plaque négative par rapport à la direction d'enroulement, et n₄ indique qu'une patte négative est située au niveau de la (n₄+1)ème w sur la plaque négative le long de la direction depuis la partie avant jusqu'à la partie arrière de la plaque négative.

3. Élément de batterie au lithium-ion selon la revendication 2, dans lequel
le premier bord de patte x₁ est inférieur ou égal à 0,5 w ; et
le second bord de patte x₂ est inférieur ou égal à 0,5 w.

4. Élément de batterie au lithium-ion selon la revendication 2, dans lequel la largeur w de l'élément est supérieure ou égale à 5 cm et est inférieure ou égale à 20 cm.

5. Élément de batterie au lithium-ion selon la revendication 2, dans lequel
une distance entre la partie arrière de la plaque positive par rapport à la direction d'enroulement et une patte positive le plus proche de la partie arrière de la plaque positive est inférieure à 8 w ; et
une distance entre la partie arrière de la plaque négative et une patte négative le plus proche de la partie arrière de la plaque négative est inférieure à 8 w.

6. Élément de batterie au lithium-ion, comprenant :
une plaque positive ;
une membrane ; et
une plaque négative, dans lequel
une pluralité de pattes positives est agencée selon une direction d'enroulement sur la plaque positive dans un état déplié, une pluralité de pattes négatives est agencée selon la direction d'enroulement sur la plaque négative dans un état déplié ; et
la plaque positive et la plaque négative sont séparées par la membrane et sont enroulées de façon à former l'élément de batterie au lithium-ion, la pluralité de pattes positives forme une structure de patte en quinconce, et la pluralité de pattes négatives forme une structure de patte en quinconce ;
dans laquelle
dans laquelle les intervalles entre des pattes positives adjacentes dans m₁ pattes positives sont identiques ; à partir de la première des m₁ pattes positives, d₁ des m₁ pattes positives est diminué d'une première valeur d'intervalle mq ; dans lequel d₁=n₁w-x₁+(0,5πt∑n₁-0,5πt), q indique un intervalle entre deux pattes positives en quinconce adjacentes, m indique un numéro de séquence d'une patte positive dans les m₁ pattes positives le long d'une direction depuis la partie avant jusqu'à la partie arrière de la plaque positive, 1≤m≤m₁ ; ou
en commençant à partir de la première des m₁ pattes positives, d₁ de chacune des m₁ pattes positives est augmenté d'une première valeur d'intervalle mq ; dans lequel d₁=n₃w+x₁+[0,5πt∑(n₃+1)-0,5πt] ; q indique un intervalle entre deux pattes positives en quinconce adjacentes, m indique un numéro de séquence d'une patte positive dans les m₁ pattes positives le long d'une direction depuis la partie avant jusqu'à la partie arrière de la plaque positive 1≤m≤m₁ ; où t indique une somme de l'épaisseur de la plaque positive, de la membrane et de la plaque négative, w indique une largeur de l'élément, la première patte positive est celle des pattes positives qui est située le plus proche de la partie avant de la plaque positive, n₁ indique qu'une patte positive est située au niveau de la n₁ème w sur la plaque positive le long d'une direction depuis la partie avant jusqu'à une partie arrière de la plaque positive, et n₃ indique qu'une patte positive est située au niveau de la (n₃+1)ème w sur la plaque positive le long de la direction depuis la partie avant jusqu'à la partie arrière de la plaque positive.

7. Élément de batterie au lithium-ion selon la revendication 6, dans lequel les intervalles entre des pattes négatives en quinconce adjacentes dans m2 pattes négatives sont identiques.

8. Élément de batterie au lithium-ion selon la revendication 7, dans lequel
en commençant à partir de la première des m2 pattes négatives, d₂ de chacune des m₂ pattes négatives est diminué d'une première valeur d'intervalle mq ;
dans lequel d₂=n₄w-x₂+(0,5πt∑(n₄+1)-0,5πt), q indique un intervalle entre deux pattes négatives en quinconce adjacentes, m indique un numéro de séquence d'une patte négative dans les m₂ pattes négatives le long d'une direction depuis la partie avant jusqu'à la partie arrière de la plaque négative par rapport à la direction d'enroulement, 1≤m≤m₂.

9. Batterie au lithium-ion selon la revendication 7, dans laquelle
en commençant à partir de la première des m2 pattes négatives, d₂ de chacune des m₂ pattes négatives est augmenté d'une première valeur d'intervalle mq ;
dans lequel d₂=n₄w+x₂+[0,5πt∑(n₄+1)-0,5πt], q indique un intervalle entre deux pattes négatives en quinconce adjacentes, m indique un numéro de séquence d'une patte négative dans les m₂ pattes négatives le long d'une direction depuis la partie avant jusqu'à la partie arrière de la plaque négative. 1≤m≤m₂.

10. Batterie au lithium-ion, comprenant un boîtier de batterie et l'élément de batterie au lithium-ion, selon la revendication 1 ou 6, dans le boîtier de batterie.

11. Batterie au lithium-ion selon la revendication 10, dans lequel le boîtier de batterie est en aluminium.
